Europäisches Patentamt

European Patent Office

Office européen des brevets

(19)

(11)  EP 1 713 013 A1

(12)  EUROPEAN PATENT APPLICATION
published in accordance with Art. 158(3) EPC

(43) Date of publication:
  18.10.2006  Bulletin 2006/42

(51) Int Cl.:
  *G06F 17/50* (2006.01)

(21) Application number: 04801998.8

(22) Date of filing: 05.11.2004

(86) International application number:
  PCT/JP2004/016434

(87) International publication number:
  WO 2005/057434 (23.06.2005 Gazette 2005/25)

(84) Designated Contracting States:
  AT BE BG CH CY CZ DE DK EE ES FI FR GB GR
  HU IE IS IT LI LU MC NL PL PT RO SE SI SK TR

(30) Priority: 10.12.2003  JP 2003412074

(71) Applicant: MURATA MANUFACTURING CO., LTD.
  Nagaokakyo-shi, Kyoto 617-8555 (JP)

(72) Inventor: OKADA, Tsutomu,
  MURATA MANUFACTURING CO., LTD.
  Nagaokakyo-shi,
  Kyoto 617-8555 (JP)

(74) Representative: Schoppe, Fritz et al
  Patentanwälte
  Schoppe, Zimmermann, Stöckeler & Zinkler
  Postfach 246
  82043 Pullach bei München (DE)

(54)  **ELECTROMAGNETIC FIELD ANALYZER, ELECTROMAGNETIC FIELD ANALYSIS PROGRAM, AND RECORD MEDIUM ON WHICH THE PROGRAM IS RECORDED**

(57)  A division-into-element portion (22) divides form data as an analysis object into coarse elements and fine elements. A prolongation matrix forming portion (25) forms a prolongation matrix making an electromagnetic field vector of the coarse elements divided by the division-into-element portion (22) related to an electromagnetic field vector of the fine elements. Then, an approximate value calculation portion (28) and an approximate solution correction portion (29) calculate an approximate solution of the electromagnetic field vector of the fine elements by applying an iteration method of simultaneous linear equations while referring to the prolongation matrix. Accordingly, it becomes possible to perform an electromagnetic field analysis at high speed by using a multigrid method using a non-nested mesh.

FIGURE 3

EP 1 713 013 A1

# EP 1 713 013 A1

**Description**

Technical Field

The present invention relates to electromagnetic field simulation technology used in development and designing of high-frequency products such as multilayer products, giga filters, EMI (Electro-Magnetic Interference) elimination filters, etc., and more particularly to an electromagnetic field analyzer, an electromagnetic field analyzing program, and a storage medium for recording the program in which the simulation time can be shortened.

Background Art

In recent years, the development and designing of high-frequency products have been vigorously performed and, in order to perform an electromagnetic field analysis of high-frequency products, electromagnetic field simulation softwares have been widely used. Generally, there are many cases where a finite element method is used for electromagnetic field analysis. In the electromagnetic field simulation using the finite element method, since it takes a long time to solve simultaneous linear equations, high-speed solving methods are desired. In particular, in the field of electromagnetic field analysis, since nothing except for a direct method called Gauss' elimination method can be used, the problem of taking a long calculation time is more serious.

However, by a paper (R. Hiptmair, "Multigrid method for Maxwell's equations," SIAM Journal of Numerical Analysis, vol. 36, no. 1, pp. 204-225, 1999) made public by Hiptmair in 1999, it is proved that a solution method called a multigrid method can be also used in an electromagnetic field analysis and the method is paid attention to as a greatly speeding up solution when compared with a direct method.

In the multigrid method, an analysis object is divided into two classes of fine elements and coarse elements and the solution of fine elements is found by making use of the solution of coarse elements.

When simultaneous linear equations are calculated by using Gauss' elimination method, generally the calculation time is proportional to third power of dimensions of a matrix. Since the size of dimensions corresponds to the number of elements, when the number of elements becomes double, the calculation time becomes 8 times as large, and, when the number of elements becomes 10 times as large, the calculation time becomes 1000 times as large. Then, when Gauss' direct method is applied to only coarse elements, an approximate solution to fine elements is obtained by using a solution to coarse elements, and Gauss' elimination method is not used, the calculation time for fine elements can be reduced to 1/8 and 1/1000, respectively. Since additional calculation time is added, although the practical calculation time is not reduced as such, the calculation time can be greatly reduced without fail.

The multigrid method is classified into a method using a nested mesh and a method using a non-nested mesh. However, since a prolongation matrix is incomplete as described later, there is nothing except for using a method using nested mesh.

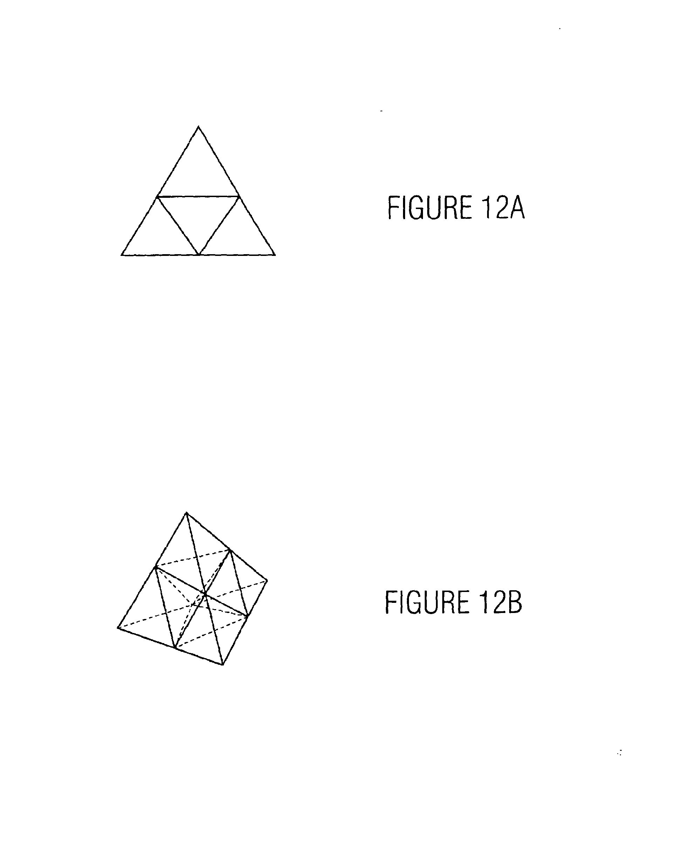

Figs. 12A and 12B are drawings for describing the division into elements using a nested mesh. Fig. 12A shows the division into elements using a nested mesh in the case of two-dimensional analysis where a coarse triangular element is uniformly divided to form fine triangular elements. Furthermore, Fig. 12B shows the division into elements using a nested mesh in the case of three-dimensional analysis where a coarse tetrahedral element is uniformly divided to form eight fine tetrahedral elements. As is understood from Figs. 12A and 12B, there are geometrical restrictions between coarse elements and fine elements in the case of nested mesh.

Non-patent document 1: R. Hiptmair, "Multigrid method for Maxwell's equations," SIAM Journal of Numerical Analysis,
Non-patent document 1: R. Hiptmair, "Multigrid method for Maxwell's equations," SIAM Journal of Numerical Analysis, vol. 36, No. 1, pp. 204-225, 1999

Non-patent document 2: D. Dibben and T. Yamada, "Non-nested multigrid and automatic mesh coarsening for high frequency electromagnetic problems" IEEJ Investigating Research Committee material, SA-02-34, pp. 71-75, 2002

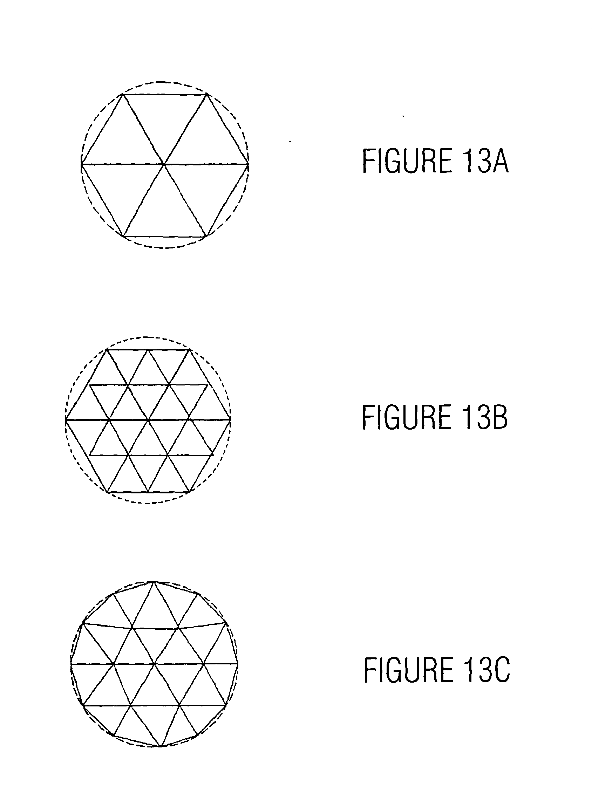

Figs. 13A and 13B are drawings for describing a first problem of nested mesh. Fig. 13A shows how a circle is divided into elements using a nested mesh to form coarse elements. Furthermore, Fig. 13B shows how coarse elements are divided into fine elements using a nested mesh. As is understood from Figs. 13A and 13B, a curved surface cannot be correctly expressed because of geometrical restrictions of a nested mesh.

Furthermore, Fig. 13C shows how a circle is divided into elements using a non-nested mesh to form fine elements. As is understood from Fig. 13C, since there are no geometrical restrictions, a curved surface can be correctly expressed.

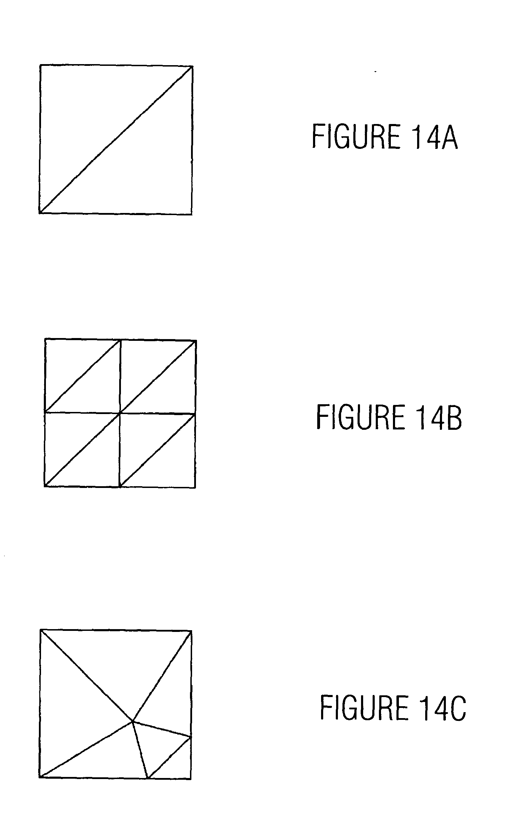

Figs. 14A to 14C are to describe a second problem of nested mesh. Fig. 14A shows how a square is divided into elements by using a nested mesh to form coarse elements. Furthermore, Fig. 14B shows how coarse elements are divided into fine elements. As is understood from Figs. 14A and 14B, coarse elements cannot be partially divided into fine elements because of the geometrical restrictions of a nested mesh.

Furthermore, Fig. 14C shows how a square is divided into elements by using a non-nested mesh to form fine elements. As is understood from Fig. 14C, coarse elements can be partially divided into fine elements because of no geometrical restrictions.

Most industrial products have curved surfaces as in a circular cylinder and a square and they inevitably contain partially fine portions. Accordingly, it is difficult to apply a nested mesh to industrial products. On the other hand, since there is no geometrical restrictions in a non-nested mesh, fine elements can be freely formed. However, since the positional relation is not systematic, it is difficult to make the electromagnetic field of coarse elements related to the electromagnetic field of fine elements. It is a prolongation matrix to make coarse elements related to fine elements, but no precise prolongation matrix has been found. This means that a multigrid method cannot be practically used, and accordingly, nothing can be used except for a Gauss' direct method which takes much time in the analysis of magnetic field.

Disclosure of Invention

The present invention has been done to solve the above problem, and it is an object of the present invention to provide an electromagnetic field analyzer, an electromagnetic field analyzing program, and a recording medium having the program recorded therein, in which the analysis of an electromagnetic field can be made by using a multigrid method using a non-nested mesh.

It is another object of the present invention to provide an electromagnetic field analyzer, an electromagnetic field analyzing program, and a recording medium in which the program has been recorded, in which the time required for an electromagnetic field analysis is greatly reduced.

According to an aspect of the present invention, an electromagnetic field analyzer comprises dividing means for dividing form data as an analysis object into coarse elements and fine elements; forming means for forming a matrix making an electromagnetic field vector of the coarse elements divided by the dividing means related to an electromagnetic field vector of the fine elements, and calculating means for calculating an approximate solution of the electromagnetic field vector of the fine elements by applying an iteration method of simultaneous linear equations while referring to the matrix formed by the forming means.

Preferably, the forming means forms the matrix by expressing the elements of electromagnetic field vectors at the sides at a fine element using an interpolation function in the coarse elements.

More preferably, when the length of a side $l_i$ of the fine element is $|l_i|$, an interpolation function showing the relation between the electromagnetic field at position x of the side $l_i$ of the fine element and the electromagnetic field at a side j of the coarse element is $N_j^C(x)$, and the tangential vector of the side $l_i$ of the fine element is $t_i$, the forming means (25) forms a matrix $P_{ij}$ by Expression (14) to be described later.

More preferably, in the calculation means, the accuracy of an approximate solution of the electromagnetic field vector of the fine elements is improved such that high-frequency components included in the approximate solution of the electromagnetic field vector of the fine element are removed by applying a stationary iteration method of simultaneous linear equations, that a residual in the fine elements is mapped to a residual in the coarse elements by using the matrix formed by the forming means, that a correction vector to the coarse elements is formed by applying a direct method or a non-stationary iteration method of simultaneous linear equations, and that a correction vector to the fine elements is obtained by using the matrix formed by the forming means.

According to another aspect of the present invention, in a computer program to cause a computer to execute an electromagnetic field analyzing method for analyzing an electromagnetic field as an analysis object, the computer contains a first storage means for storing divided elements and a second storage means for storing a matrix, and the electromagnetic field analyzing method contains the steps of dividing form data as an analysis object into coarse elements and fine elements and storing the elements in the first storage means, forming a matrix making an electromagnetic field vector of the coarse elements stored in the first storage means related to an electromagnetic field vector of the fine elements and storing the matrix in the second storage means, and calculating an approximate solution of the electromagnetic field vector of the fine elements by applying an iteration method of simultaneous linear equations while referring to the matrix stored in the second storage means.

According to another aspect of the present invention, in a storage medium, being computer readable, for recording a program to cause a computer to execute an electromagnetic field analyzing method for analyzing an electromagnetic field as an analyzing object, the computer contains a first storage means for storing divided elements and a second storage means for storing a matrix, and the electromagnetic field analyzing method contains the steps of dividing form data as an analysis object into coarse elements and fine elements and storing the elements in the first storage means, forming a matrix making an electromagnetic field vector of the coarse elements stored in the first storage means related to an electromagnetic field vector of the fine elements and storing the matrix in the second storage means, and calculating an approximate solution of the electromagnetic field vector of the fine elements by applying an iteration method of simultaneous linear equations while referring to the matrix stored in the second storage means.

According to an aspect of the present invention, since the forming means forms a matrix making an electromagnetic field vector of coarse elements divided by the dividing means related to an electromagnetic field vector of fine elements, it became possible to perform an electromagnetic field analysis by using a multigrid method using a nonnested mesh. Furthermore, since the calculating means calculates an approximate solution of the electromagnetic field vector of fine elements while referring to the matrix formed by the forming means, it is not required to calculate the electromagnetic field of fine elements by using a direct method, it became possible to largely reduce a time needed for an electromagnetic field analysis.

Furthermore, since the forming means forms a matrix such that an electromagnetic field vector element at a side of fine elements is expressed by using an interpolation function in coarse elements, it became possible to easily form a matrix.

Furthermore, in the forming means, since a matrix $P_{ij}$ is formed by Expression (14) to be described later, a matrix can be more easily formed.

Furthermore, in the calculating means, an approximate solution of an electromagnetic field vector of fine elements is corrected by using a matrix formed by the forming means, it became possible to improve the accuracy of the approximate solution of an electromagnetic field vector of fine elements at high speed.

Brief Description of the Drawings

Fig. 1 is an external appearance of an electromagnetic field analyzer according to an embodiment of the present invention.

Fig. 2 is a block diagram showing the construction of the electromagnetic field analyzer according to an embodiment of the present invention.

Fig. 3 is a block diagram showing the functional structure of the electromagnetic field analyzer.

Fig. 4 is a flow chart for describing the procedure of the electromagnetic field analyzer.

Fig. 5A shows a microstrip line divided into large elements.

Fig. 5B shows a microstrip line which is analyzed using the large elements shown in Fig. 5A and in which the elements are subdivided based on their error estimation.

Fig. 6 shows components of an electromagnetic field which are in contact with the sides of a tetrahedron.

Fig. 7 shows the relation between an electromagnetic field vector $u^F$ in $\Omega^F$ and an electromagnetic field vector $u^C$ in $\Omega^C$.

Fig. 8 shows one example of a rectangular waveguide as an analysis object of an electromagnetic field analyzer according to an embodiment of the present invention.

Fig. 9 shows the calculation time to the number of elements when the rectangular waveguide shown in Fig. 8 is driven in TE10 mode of 2.45 GHz, which is compared between the case where a related direct method is used and the case where a method of the present invention is used.

Fig. 10 shows one example of a patch antenna as an analysis object of the electromagnetic field analyzer according to an embodiment of the present invention.

Fig. 11 shows the calculation time to the number of elements when the patch antenna shown in Fig. 10 is driven at 7.0 GHz, which is compared between the case where a related direct method is used and the case where a method of the present invention is used.

Fig. 12A shows elements divided by using a nested mesh in the case of two-dimensional analysis.

Fig. 12B shows elements divided by using a nested mesh in the case of three-dimensional analysis.

Fig. 13A shows coarse elements formed such that a circle is divided into elements by using a nested mesh.

Fig. 13B shows fine elements into which coarse elements are divided by using a nested mesh.

Fig. 13C shows fine elements formed such that a circle is divided into elements by using a non-nested mesh.

Fig. 14A shows coarse elements formed such that a square is divided into elements using a nested mesh.

Fig. 14B shows fine elements into which coarse elements are divided by using a nested mesh.

Fig. 14C shows fine elements formed such that a square is divided into elements by using a non-nested mesh.

Reference Numerals

1    computer main body
2    display device
3    FD drive
4    FD
5    keyboard
6    mouse
7    CD-ROM device

| 8 | CD-ROM |
| 9 | network communications device |
| 10 | CPU |
| 11 | ROM |
| 12 | RAM |
| 13 | hard disk |
| 21 | form data storage portion |
| 22 | division-into-element portion |
| 23 | element storage portion |
| 24 | vector/matrix forming portion |
| 25 | prolongation matrix forming portion |
| 26 | vector/matrix storage portion |
| 27 | prolongation matrix storage portion |
| 28 | approximate value calculation portion |
| 29 | approximate solution correction portion |
| 30 | electromagnetic-field vector storage portion |

Best Mode for Carrying Out the Invention

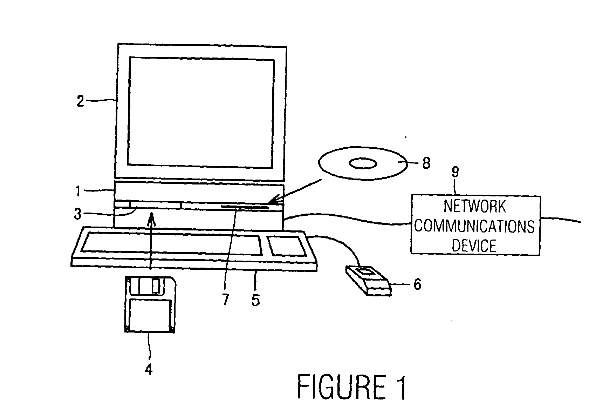

Fig. 1 is an external appearance of an electromagnetic field analyzer according to an embodiment of the present invention. The electromagnetic field analyzer contains a computer main body 1, a display device 2, an FD (Flexible Disk) drive 3 to which an FD 4 is attached, a keyboard 5, a mouse 6, a CD-ROM (Compact Disk- Read Only Memory) drive 7 to which a CD-ROM 8 is attached, and a network communications device 9. An electromagnetic field analyzing program is supplied through a recording medium such as an FD 4, a CD-ROM 8, etc. An electromagnetic field analysis is performed such that the electromagnetic field analyzing program is executed by the computer main body 1. Furthermore, the electromagnetic field analyzing program may be supplied to the computer main body 1 by anther computer through the network communications device 9.

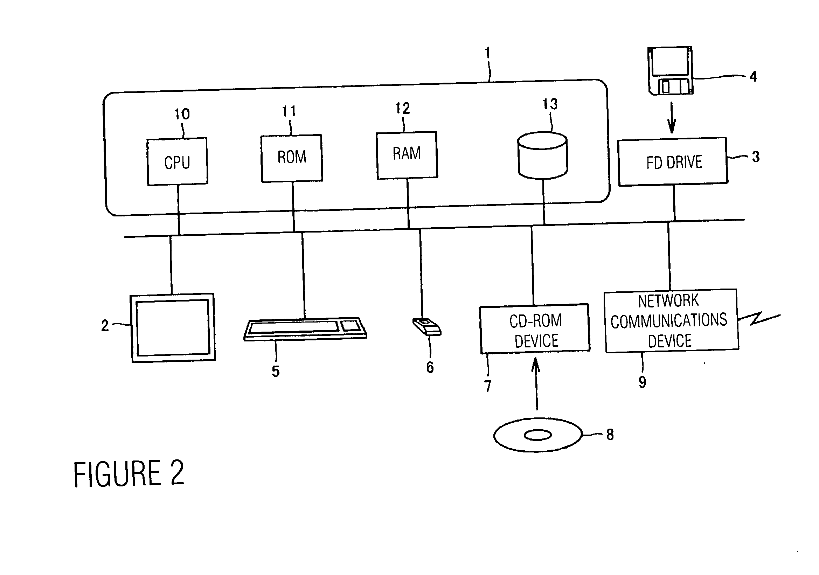

Fig. 2 is a bock diagram showing the construction of the electromagnetic field analyzer of an embodiment of the present invention. The computer main body 1 shown in Fig. 1 contains a CPU (Central Processing Unit) 10, a ROM (Read Only Memory) 11, a RAM (Random Access Memory) 12, and a hard disk 13. The CPU 10 conducts processing while the CPU 10 inputs and outputs data to the display device 2, the FD drive 3, the keyboard 5, the mouse 6, the CD-ROM device 7, the network communications device 9, the ROM 11, the RAM 12, or the hard disk 13. The electromagnetic field analyzing program in the FD 4 or the CD-ROM 8 is stored in the hard disk 13 through the FD drive 3 or the CD-ROM 7. The electromagnetic field analysis is performed such that the CPU 10 properly loads the electromagnetic field analyzing program from the hard disk 13 in the RAM 12 and executes the program.

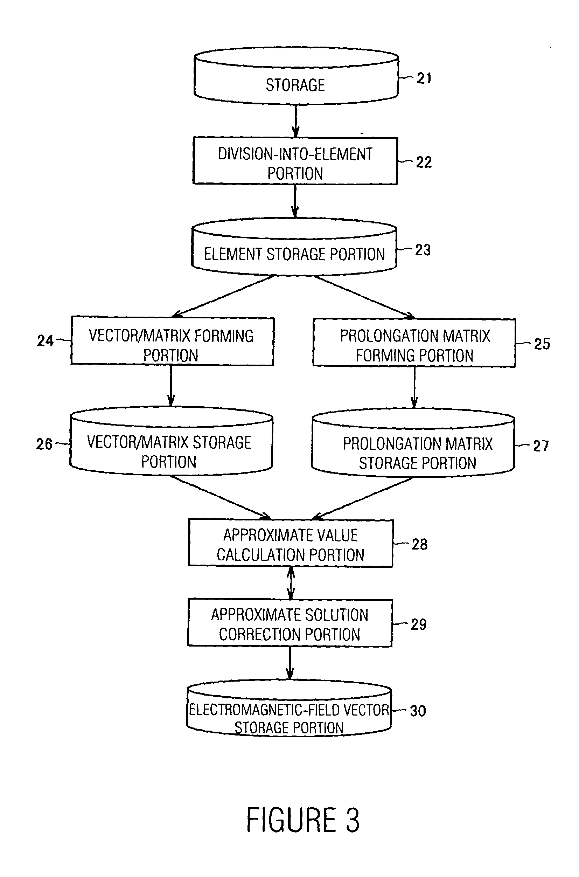

Fig. 3 is a block diagram showing the functional structure of the electromagnetic field analyzer according to an embodiment of the present invention. The electromagnetic field analyzer contains a form data storage portion 21 for storing form data as an analysis object, a division-into-element portion 22 for dividing the form data such that the size of elements is changed, an element storage portion 23 for storing the elements divided by the division-into-element portion 22, a vector/matrix forming portion 24 for forming a vector and matrix in simultaneous linear equations, a prolongation matrix forming portion 25 for forming a prolongation matrix, a vector/matrix storage portion 26 for storing the vector and matrix formed by the vector/matrix forming portion 24, a prolongation matrix storage portion 27 for storing the prolongation matrix formed by the prolongation matrix forming portion 25, an approximate value calculation portion 28 for calculating an approximate value of an electromagnetic field vector, an approximate solution correction portion 29 for correcting the approximate solution calculated by the approximate value calculation portion 28, and an electromagnetic-field vector storage portion 30 for storing as an electromagnetic field vector the approximate solution after having been corrected by the approximate solution correction portion 29.

Moreover, the form data storage portion 21, the element storage portion 23, the vector/matrix storage portion 26, the prolongation matrix storage portion 27, and the electromagnetic field vector storage portion 30 are provided in a fixed area in the RAM 12 or the hard disk 13 shown in Fig. 2. Furthermore, the function of the division-into-element portion 22, the vector/matrix forming portion 24, the prolongation matrix forming portion 25, the approximate value calculation portion 28, and the approximate solution correction portion 29 is realized such that the CPU 10 shown in Fig. 2 executes the electromagnetic field analyzing program loaded into the RAM 12.

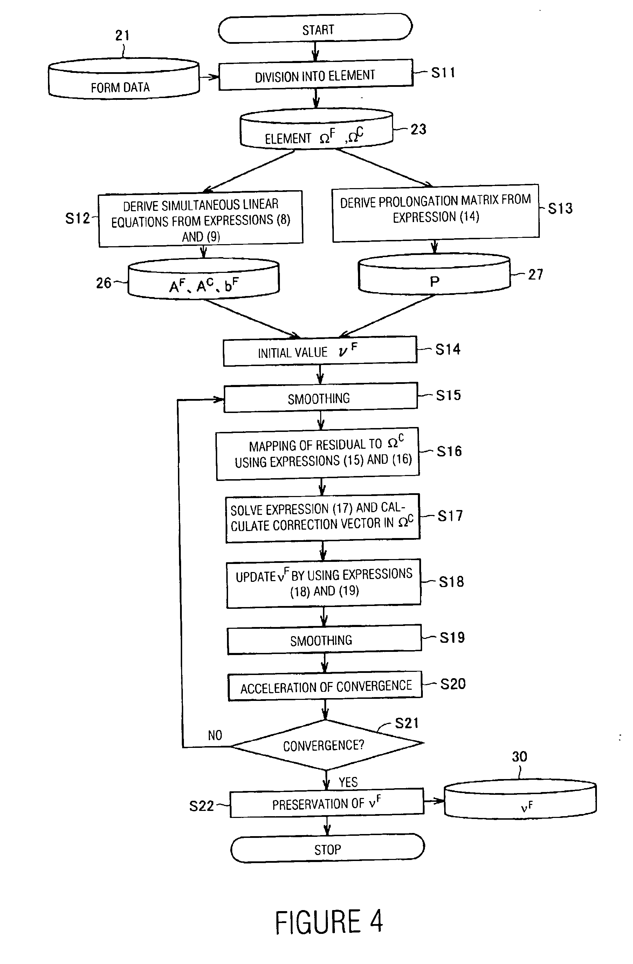

Fig. 4 is a flow chart for describing the procedure of the electromagnetic field analyzer according to an embodiment of the present invention. First, the division-into-element portion 22 reads form data as an analysis object stored in the form data storage portion 21, divides the form data into elements, and preserves the divided elements in the element storage portion 23 (S11). The division-into-element portion 22 divides the form data into triangular or quadrangular elements in the case of two-dimensional analysis, and divides the form data into tetrahedral, triangle-pole-shaped, or square-pole-shaped elements in the case of three-dimensional analysis.

The division-into-element portion 22 divides the form data while changing the size of elements. In order to make the description simple, here elements of two different sizes are formed and it is assumed that a set of larger (coarse) elements is made $\Omega^C$ and a set of smaller (fine) elements is made $\Omega^F$. Moreover, a superscript of c represents coarse, and a superscription of F represents fine.

The sets of $\Omega^C$ and $\Omega^F$ may be independently formed, but, when the set of $\Omega^C$ is first formed and then the set of $\Omega^F$ is formed by subdividing the elements, the processing time is shortened. Regarding the method of subdivision, there are a method for subdividing elements which are larger in volume and a method for analyzing elements by using $\Omega^C$ and subdividing elements having large error. Either of them may be used, but the method in which error is evaluated has a better calculation accuracy. Moreover, regarding the method for evaluating error, Document No. 1 (Norio Kamiya et al., "computer and application's monk, special edition/error estimation in software and adaptive element," No. 42, CORONA PUBLISHING CO., 1993)) can be referred to.

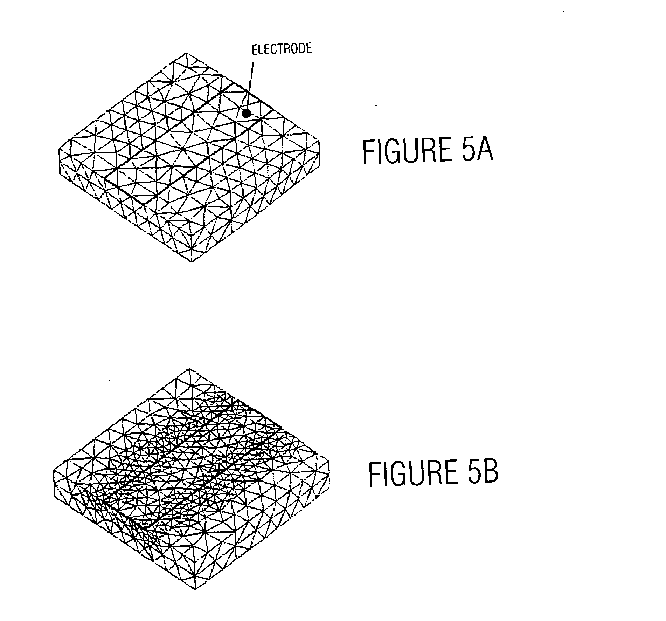

Figs. 5A and 5B show examples of division into elements in a microstrip line. In Fig. 5A, the microstrip line is divided into larger elements. Furthermore, in Fig. 5B, an analysis is performed by using the larger elements in Fig. 5A and the elements are subdivided based on their error estimation. Since the electromagnetic field is concentrated at the edge of an electrode, the portion is subdivided into smaller elements.

Next, the vector/matrix forming portion 24 reads the sets $\Omega^C$ and $\Omega^F$ stored in the element storage portion 23, discretization of the sets takes place using their elements such that a finite element method is applied to a Maxwell equation, and a matrix and column vector in simultaneous linear equations are formed (S12). Here, the Maxwell equation as an object is represented by the following expression.

Expression 1

$$\nabla \times H = (\hat{\sigma} + j\omega\hat{\varepsilon})E \qquad \cdots (1)$$

$$\nabla \times E = -j\omega\hat{\mu}H \qquad \cdots (2)$$

Here, E: electric field, H: magnetic field, $\varepsilon$: dielectric constant, $\mu$: permeability, $\sigma$: conductivity, $\omega$: angular frequency, $\nabla$: differential operator ($\partial/\partial x$, $\partial/\partial y$, $\partial/\partial z$), X: outer product, j: imaginary number

[0036]  From these expressions, the following differential equation can be obtained.

Expression 2

$$\nabla \times \hat{p}\nabla \times u - \omega^2\hat{q}u = 0 \qquad \cdots (3)$$

u represents an electric field, magnetic field, etc., and $\hat{p}$ and $\hat{q}$ represent characteristic values of dielectric constant and permeability. For example, when Expression (3) is obtained by substituting Expression (2) into Expression (1) and eliminating H, u represents an electric field, $\hat{p}$ represent the reciprocal of a permeability, and $\hat{q}$ represents a dielectric constant.

When a finite element method is applied to an element $V_k$ formed in the above former process, the following expression can be obtained.

Expression 3

$$\int_{V_k} (\nabla \times N_{ki})\hat{p}(\nabla \times u)dV - \omega^2 \int_{V_k} N_{ki}\hat{q}udV = \int_{\partial V_k} (N_{ki} \times \hat{p}\nabla \times u)\cdot ndS$$

$$\cdots (4)$$

Here, $\partial V_k$ represents the surface of $V_k$ and n represents an outward normal unit vector. $N_{ki}$ represents an interpolation function (also called a shape function, insertion function, basis function, etc.) When tetrahedral elements and linear equations are used, the interpolation function is given by the following expression.

Expression 4

$$N_{k1} = \left| l_1 \right| (L_2 \nabla L_3 - L_3 \nabla L_2)$$
$$N_{k2} = \left| l_2 \right| (L_3 \nabla L_1 - L_1 \nabla L_3)$$
$$N_{k3} = \left| l_3 \right| (L_1 \nabla L_2 - L_2 \nabla L_1)$$
$$N_{k4} = \left| l_4 \right| (L_1 \nabla L_4 - L_4 \nabla L_1)$$
$$N_{k5} = \left| l_5 \right| (L_2 \nabla L_4 - L_4 \nabla L_2)$$
$$N_{k6} = \left| l_6 \right| (L_3 \nabla L_4 - L_4 \nabla L_3)$$

$$\cdots (5)$$

Here, $L_1$ to $L_4$ represent a volume coordinate system and $|1_1|$ to $|1_6|$ represent the length of a side $l_i$. Moreover, regarding the detail of the volume coordinate system, Document 2 (T. Itoh, G. Pelosi and P. P. Silvester, "Finite Element Software for Microwave Engineering," John Wiley & Sons, pp101-125, 1996) can be referred to.

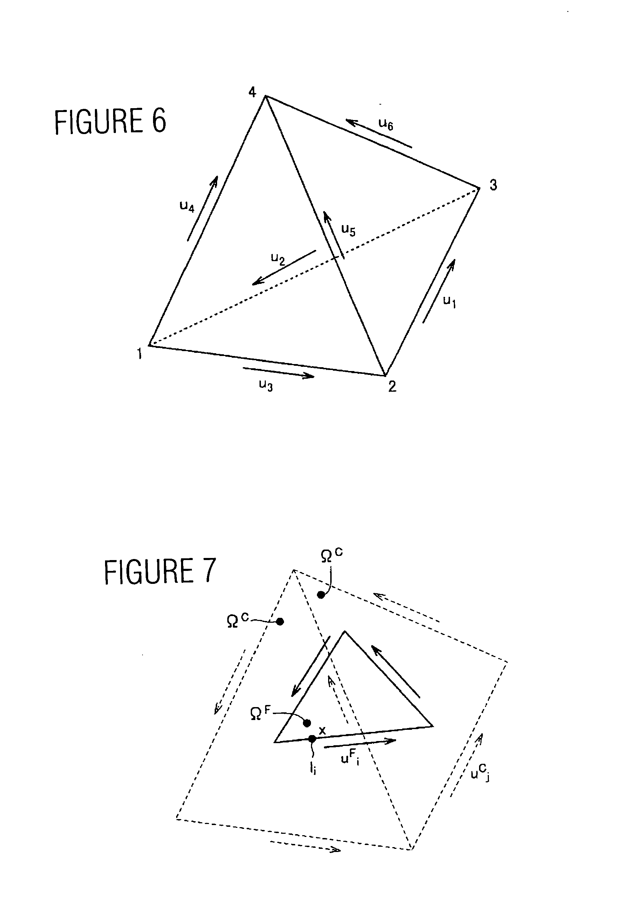

Fig. 6 shows components of an electromagnetic field u which are in contact with the sides of a tetrahedron. The components of the electromagnetic field u are disposed so as to be along the six sides, and they are represented by $u_1$ to $u_6$. The electromagnetic field at point x inside the element $V_k$ can be represented by the following expression using Expression (5) and the six components of an electromagnetic field.

Expression 5

$$u(x) = \sum_{i=1}^{6} N_{ki}(x) u_{kl} \qquad \cdots (6)$$

When Expression (6) is substituted into Expression (4) and applied to all the elements of $\Omega^F$, the following simultaneous linear equations can be obtained.

Expression 6

$$A^F u^F = b^F \qquad \cdots (7)$$

Here, $u^F$ is vectors which are electromagnetic fields disposed at the sides, and the dimensions are equal to the number of the sides as a general rule. The components of a matrix $A^F$ are formed by the following expression.

Expression 7

$$\sum_{k=1}^{N^F} \sum_{i=1}^{6} \sum_{j=1}^{6} \left[ \int_{V_k} (\nabla \times N_{ki}) \hat{p} (\nabla \times N_{kj}) dV - \omega^2 \int_{V_k} N_{ki} \hat{q} N_{kj} dV \right] \qquad \cdots (8)$$

Furthermore, a vector $b^F$ is formed by the following expression.

Expression 8

$$\sum_{k=1}^{N^F} \sum_{i=1}^{6} \sum_{j=1}^{6} \int_{\partial V_k} (N_{ki} \times \hat{p}\nabla \times N_{kj}) \cdot n dS \qquad \cdots (9)$$

Here, $N^F$ is the number of elements in $\Omega^F$.

The vector/matrix forming portion 24 also forms a matrix $A^C$ corresponding to $\Omega^C$ in the same procedure and preserves $A^F$, $b^F$, and $A^C$ in the vector/matrix storage portion 26. When $u^F$ is found by calculating simultaneous linear equations in Expression (7), the electromagnetic field distribution can be calculated using Expression (6) to result in the solutions of Maxwell equations in Expressions (1) and (2).

Next, the prolongation matrix forming portion 25 reads elements $\Omega^F$ and $\Omega^C$ formed in the former process from the element storage portion 23 and, based on the geometric information, the prolongation matrix forming portion 25 forms a prolongation matrix P which makes the electromagnetic field vector $u^F$ in $\Omega^F$ related to the electromagnetic field vector $u^C$ in $\Omega^C$ (S13). When the prolongation matrix is used, as shown in the following expression, one vector can make the other vector determined.

Expression 9

$$u^F = P u^C \qquad \cdots (10)$$

$$u^C = P^t u^F \qquad \cdots (11)$$

Here, t means a transposed matrix.

Fig. 7 shows the relation between an electromagnetic field vector $u^F$ in $\Omega^F$ and an electromagnetic field vector $u^C$ in $\Omega^C$. The j component $u_j^C$ of the column vector $u^C$ is disposed at the side of an element of $\Omega^C$ and the electromagnetic field $u(x)$ at the position x in $\Omega^F$ can be represented using an interpolation function $N^C$ in $\Omega^C$.

Expression 10

$$u(x) = \sum_j N_j^C(x) u_j^C \qquad \cdots (12)$$

The i component $u_i^F$ of $u^F$ is made an average value of an electromagnetic field at the side $l_i$ where the i component $u_i^F$ is disposed. That is, the i component $u_i^F$ of $u^F$ is represented by the following expression.

Expression 11

$$u_i^F = \frac{1}{|l_i|} \int_{l_i} u(x) \cdot t_i dl \qquad \cdots (13)$$

Here, $t_i$ represents a tangential unit vector of the side $l_i$. When Expression (12) is substituted for Expression (13) and compared with Expression (10), the ij component $P_{ij}$ of a prolongation matrix P is given by the following expression.

Expression 12

$$P_{ij} = \frac{1}{|l_i|} \int_{l_i} N_j^C(x) \cdot t_i \, dl \qquad \cdots (14)$$

The prolongation matrix forming portion 25 forms a prolongation matrix using Expression (14) and preserves the prolongation matrix in the prolongation matrix storage portion 27.

Next, the approximate value calculation portion 28 sets an approximate initial value $v^F$ to $u^F$ in order to calculate the electromagnetic field vector $v^F$ using simultaneous linear equations according to a multigrid method (S14). The initial value $v^F$ may be zero. Moreover, the detail of calculation of the simultaneous linear equations according to the multigrid method can be referred to Document 3 (W. Briggs, V. Henson and S. McCormick, "A Multigrid Tutorial," SIAM).

Next, the approximate value calculation portion 28 removes high-frequency components of error contained in $v^F$ by applying a stationary iteration method of simultaneous linear equations such as Jacob method, Gauss-Seidel method, SOR method, etc., to Expression (7) (S15). Moreover, the detail of the iteration method can be referred to Document 4 (Satomi Hasegawa, Hidehiko Hasegawa, Kiyoji Fujino, "Iteration Method Templates", Asakura shoten, 1996).

Next, the approximate value calculation portion 28 maps a residual $r^F$ in $\Omega^F$ to a residual $r^C$ in $\Omega^C$ by using the following expression in order to remove low-frequency components (S16).

Expression 13

$$r^F = b^F - A^F v^F \qquad \cdots (15)$$

$$r^C = P^t r^F \qquad \cdots (16)$$

Next, the approximate value calculation portion 28 finds solutions of simultaneous linear equations in the following expression (17) and calculates a correction vector $e^C$ (S17).

Expression 14

$$A^C e^C = r^C \qquad \cdots (17)$$

In Expression (17), although a non-stationary iteration method such as a direct method according to Gauss elimination method, a CG method, a GMRES method, etc., is used, since Expression (17) is a small matrix when compared with Expression (7), the calculation can be performed in a short time. Moreover, the detail of the iteration method can be referred to the above document 4.

Next, the approximate solution correction portion 29 improves the accuracy of the approximate solution by returning the correction vector of $\Omega^C$ to the correction vector of $\Omega^F$ by using the following Expressions (18) and (19) (S18).

Expression 15

$$e^F = P e^C \qquad \cdots (18)$$

$$v^F = v^F + e^F \qquad \cdots (19)$$

The approximate solution correction portion 29 makes high-frequency components attenuated by applying smoothing shown in step 15 a couple of times to the approximate solution (S19).

Although the above processing in step S15 to S19 is the basic algorithm of a multigrid method, since there are cases where the convergence is slow, the convergence is quickened by using another iteration method for simultaneous linear equations together as required (S20). Concretely, the above processing is used as a pretreatment for a non-stationary iteration method such as a CG method, a GMRES method, a GCR method, etc., or the processing is accelerated by a residual cutting method, etc. Moreover, the detail of the residual cutting method can be referred to document 5 (Kikuchi et al., JSME International Journal, 62-604, Series B p4076-, 1996-12) .

Next, the approximate solution correction portion 29 evaluates the residual of Expression (15) (S21). When the residual is large (S21 is no), since the electromagnetic field vector does not converge, the process goes back to step S15 and the following processing is repeated. Furthermore, when the residual is a sufficiently small value (S21 is yes), it is understood that the electromagnetic field vector converges, and the approximate solution $v^F$ is stored in the electromagnetic field vector storage portion 30 (S22) and the processing is finished.

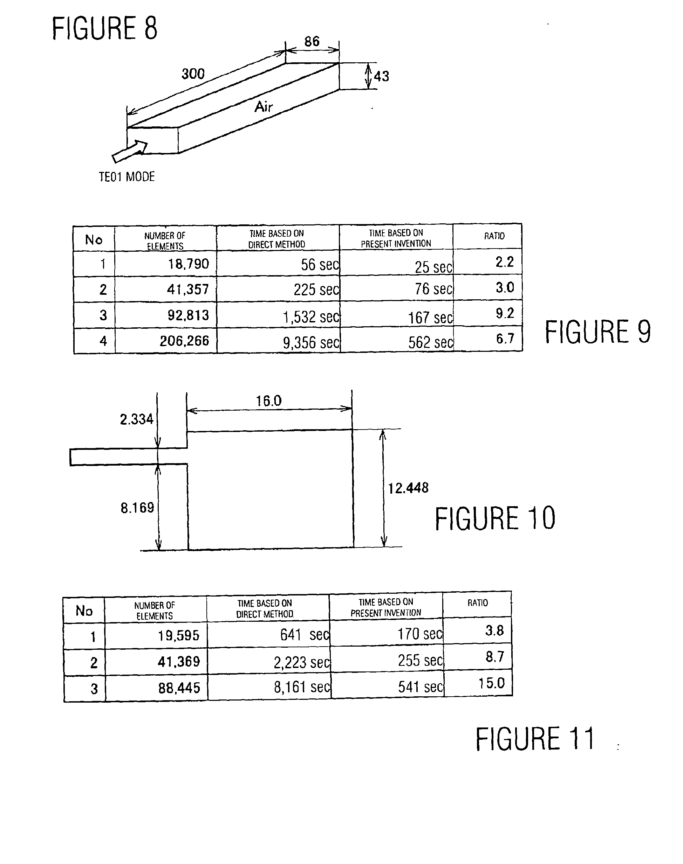

Fig. 8 shows one example of a rectangular waveguide as an analysis object of an electromagnetic field analyzer according to an embodiment of the present invention. The dimensions of this rectangular waveguide is as shown in Fig. 8 and the inside is filled with air. The electromagnetic field analysis is performed using tetrahedral primary elements.

In Fig. 9, the calculation time to the number of elements when the rectangular waveguide shown in Fig. 8 is driven in TE10 mode of 2.45 GHz is compared between the case where a related direct method is used and the case where a method of the present invention is used. As is understood from Fig. 9, when the number of elements increases, the effect of the case where an electromagnetic field analyzer of the present embodiment is used is eminent and, when the number of elements is 206,266, the speed of the processing is about 17 times as high as when compared with the related direct method.

Fig. 10 shows one example of a patch antenna as an analysis object of the electromagnetic field analyzer according to an embodiment of the present invention. The dimensions of the patch antenna are as shown in Fig. 10 and the patch antenna is formed on a dielectric substrate having a thickness of 0.794 mm and a dielectric constant of 2.2. The electromagnetic field analysis is performed by using primary tetrahedral elements.

In Fig. 11, the calculation time to the number of elements when the patch antenna shown in Fig. 10 is driven at 7.0 GHz is compared between the case where a related direct method is used and the case where a method of the present invention is used. As is understood from Fig. 11, when the number of elements increases, the effect of the case where an electromagnetic field analyzer of the present embodiment is used is eminent and, when the number of elements is 88,445, the speed of the processing is about 15 times as high as when compared with the related direct method.

As described above, according to the electromagnetic field analyzer of the present embodiment, since a prolongation matrix P making the electromagnetic field vector $u^F$ in $\Omega^F$ related to the electromagnetic field vector $u^C$ in $\Omega^C$ is formed and an electromagnetic field vector is calculated by using this prolongation matrix, it became possible to perform an electromagnetic field analysis by using a multigrid method using non-nested mech.

Furthermore, since it became possible to perform an electromagnetic field analysis by using a multigrid method using non-nested mesh, the time required for analysis can be greatly reduced when compared with an electromagnetic field analysis using a direct method.

The embodiments described this time are exemplification in all aspects and not restrictive. The scope of the present invention is not shown by the above description, but shown by the scope of the claims, and the range equivalent to the scope of the claims and all modifications within the scope of the claims are to be included.

**Claims**

**1.** An electromagnetic field analyzer comprising:

dividing means (22) for dividing form data as an analysis object into coarse elements and fine elements;
forming means (25) for forming a matrix making an electromagnetic field vector of the coarse elements divided by the dividing means (25) related to an electromagnetic field vector of the fine elements, and
calculating means (28 and 29) for calculating an approximate solution of the electromagnetic field vector of the fine elements by applying an iteration method of simultaneous linear equations while referring to the matrix formed by the forming means (25).

**2.** An electromagnetic field analyzer as claimed in claim 1, wherein the forming means (25) forms the matrix by expressing the elements of electromagnetic field vectors at the sides at a fine element using an interpolation function in the coarse elements.

**3.** An electromagnetic field analyzer as claimed in claim 2, wherein, when the length of a side $l_i$ of the fine element is $||l_i||$, an interpolation function showing the relation between the electromagnetic field at position x of the side $l_i$ of the fine element and the electromagnetic field at a side j of the coarse element is $N_j^C(x)$, and the tangential vector of the side $l_i$ of the fine element is $t_i$, the forming means (25) forms a matrix $P_{ij}$ by using the following expression.

Expression 1

$$P_{ij} = \frac{1}{|l_i|} \int_{l_i} N_j^C(x) \cdot t_i \, dl \qquad \cdots (14)$$

**4.** An electromagnetic field analyzer as claimed in any one of claims 1 to 3, wherein, in the calculation means (28 and 29), the accuracy of an approximate solution of the electromagnetic field vector of the fine elements is improved such that high-frequency components included in the approximate solution of the electromagnetic field vector of the fine element are removed by applying a stationary iteration method of simultaneous linear equations, that a residual in the fine elements is mapped to a residual in the coarse elements by using the matrix formed by the forming means (25), that a correction vector to the coarse elements is formed by applying a direct method or a non-stationary iteration method of simultaneous linear equations, and that a correction vector to the fine elements is obtained by using the matrix formed by the forming means (25).

**5.** A computer program to cause a computer to execute an electromagnetic field analyzing method for analyzing an electromagnetic field as an analysis object,
wherein the computer contains a first storage means (23) for storing divided elements and a second storage means (27) for storing a matrix, and
wherein the electromagnetic field analyzing method contains the steps of dividing form data as an analysis object into coarse elements and fine elements and storing the elements in the first storage means (23), forming a matrix making an electromagnetic field vector of the coarse elements stored in the first storage means (23) related to an electromagnetic field vector of the fine elements and storing the matrix in the second storage means (27), and calculating an approximate solution of the electromagnetic field vector of the fine elements by applying an iteration method of simultaneous linear equations while referring to the matrix stored in the second storage means (27).

**6.** A storage medium, being computer readable, for recording a program to cause a computer to execute an electromagnetic field analyzing method for analyzing an electromagnetic field as an analyzing object,
wherein the computer contains a first storage means (23) for storing divided elements and a second storage means (27) for storing a matrix, and
wherein the electromagnetic field analyzing method contains the steps of dividing form data as an analysis object into coarse elements and fine elements and storing the elements in the first storage means (23), forming a matrix making an electromagnetic field vector of the coarse elements stored in the first storage means (23) related to an electromagnetic field vector of the fine elements and storing the matrix in the second storage means (27), and calculating an approximate solution of the electromagnetic field vector of the fine elements by applying an iteration method of simultaneous linear equations while referring to the matrix stored in the second storage means (27).

FIGURE 1

1

4

10 CPU  11 ROM  12 RAM  13

FD DRIVE — 3

2

5

6

CD-ROM DEVICE  7

8

NETWORK COMMUNICATIONS DEVICE  9

FIGURE 2

STORAGE — 21

↓

DIVISION-INTO-ELEMENT PORTION — 22

↓

ELEMENT STORAGE PORTION — 23

24 — VECTOR/MATRIX FORMING PORTION

PROLONGATION MATRIX FORMING PORTION — 25

↓

26 — VECTOR/MATRIX STORAGE PORTION

PROLONGATION MATRIX STORAGE PORTION — 27

↓

APPROXIMATE VALUE CALCULATION PORTION — 28

↕

APPROXIMATE SOLUTION CORRECTION PORTION — 29

↓

ELECTROMAGNETIC-FIELD VECTOR STORAGE PORTION — 30

# FIGURE 3

FIGURE 4

15

FIGURE 5A

FIGURE 5B

FIGURE 6

FIGURE 7

# FIGURE 8

TE01 MODE

| No | NUMBER OF ELEMENTS | TIME BASED ON DIRECT METHOD | TIME BASED ON PRESENT INVENTION | RATIO |
|----|----|----|----|----|
| 1 | 18,790 | 56 sec | 25 sec | 2.2 |
| 2 | 41,357 | 225 sec | 76 sec | 3.0 |
| 3 | 92,813 | 1,532 sec | 167 sec | 9.2 |
| 4 | 206,266 | 9,356 sec | 562 sec | 6.7 |

# FIGURE 9

# FIGURE 10

| No | NUMBER OF ELEMENTS | TIME BASED ON DIRECT METHOD | TIME BASED ON PRESENT INVENTION | RATIO |
|----|----|----|----|----|
| 1 | 19,595 | 641 sec | 170 sec | 3.8 |
| 2 | 41,369 | 2,223 sec | 255 sec | 8.7 |
| 3 | 88,445 | 8,161 sec | 541 sec | 15.0 |

# FIGURE 11

FIGURE 12A

FIGURE 12B

FIGURE 13A

FIGURE 13B

FIGURE 13C

FIGURE 14A

FIGURE 14B

FIGURE 14C

## INTERNATIONAL SEARCH REPORT

| International application No. |
|---|
| PCT/JP2004/016434 |

A. CLASSIFICATION OF SUBJECT MATTER
  Int.Cl⁷ G06F17/50

According to International Patent Classification (IPC) or to both national classification and IPC

B. FIELDS SEARCHED

Minimum documentation searched (classification system followed by classification symbols)
  Int.Cl⁷ G06F17/50

Documentation searched other than minimum documentation to the extent that such documents are included in the fields searched

Electronic data base consulted during the international search (name of data base and, where practicable, search terms used)
  IEEE Xplore

C. DOCUMENTS CONSIDERED TO BE RELEVANT

| Category* | Citation of document, with indication, where appropriate, of the relevant passages | Relevant to claim No. |
|---|---|---|
| X<br>Y | Katsumi TSUBOTA et al., "Non-Nested Multigrid-ho o Mochiita Yugen Yoso Kaiseki no Kosokuka", Denki Gakkai Kenkyukai Shiryo, Seishiki kaiten ki Godo Kenkyukai, SA-99-1 to 12, RM-99-55 to 66, 19 August, 1999 (19.08.99), pages 19 to 24 (SA-99-4, RM-99-58) | 1,2,4-6<br>3 |
| X<br>Y | Herbert De Gersem et al., Full Multigrid for Magnetostatics Using Unstructured and Non-Nested Meshes, IEEE Transactions on Magnetics, Vol.37, No.5, pages 3460 to 3464, September 2001 | 1,2,4-6<br>3 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 November, 2004 (18.11.04) | 07 December, 2004 (07.12.04) |

| Name and mailing address of the ISA/<br>  Japanese Patent Office | Authorized officer |
|---|---|
| Facsimile No. | Telephone No. |

Form PCT/ISA/210 (second sheet) (January 2004)

22

**INTERNATIONAL SEARCH REPORT**

International application No.

PCT/JP2004/016434

C (Continuation). DOCUMENTS CONSIDERED TO BE RELEVANT

| Category* | Citation of document, with indication, where appropriate, of the relevant passages | Relevant to claim No. |
|---|---|---|
| Y | Akihisa KAMEARI, "Kika Mltigrid-ho no Denjiba Suchi Kaiseki eno Tekiyo", Denki Gakkai Kenkyu kai Shiryo, Seishiki Kaitenki Godo Kenkyukai, SA-01-1 to 19, RM-01-69 to 87, 02 August, 2001 (02.08.01), pages 61 to 66 (SA-01-11, RM-01-79), page 62, left column, line 13 to page 63, left column, line 22 | 3 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **R. HIPTMAIR.** Multigrid method for Maxwell's equations. *SIAM Journal of Numerical Analysis,* 1999, vol. 36 (1), 204-225
- **D. DIBBEN ; T. YAMADA.** Non-nested multigrid and automatic mesh coarsening for high frequency electromagnetic problems. *IEEJ Investigating Research Committee material,* 2002, vol. SA-02-34, 71-75
- computer and application's monk, special edition /error estimation in software and adaptive element. **NORIO KAMIYA et al.** computer and application's monk, special edition/error estimation in software and adaptive element. CORONA PUBLISHING CO, 1993
- **T. ITOH ; G. PELOSI ; P. P. SILVESTER.** Finite Element Software for Microwave Engineering. John Wiley & Sons, 1996, 101-125